# EUROPÄISCHE PATENTSCHRIFT

(11) **EP 1 998 588 B1**
(45) Veröffentlichungstag und Bekanntmachung des Hinweises auf die Patenterteilung: **25.07.2012**
(21) Anmeldenummer: 08156972.5
(22) Anmeldetag: 27.05.2008
(51) Int. Cl.: H04W 4/02, G08G 1/16

(54) **Verfahren zur Verringerung der Latenzzeit bei der Datenübertragung innerhalb eines Kommunikationsnetzes, Verfahren zur Kommunikation zwischen Nutzer-Endeinrichtungen in einem zellularen Kommunikationsnetz und zellulares Kommunikationsnetz**
Method for reducing latency when transferring data within a communication network, method for communicating between user terminals in a cellular communication network and cellular communication network
Procédé de réduction du temps de latence lors de la transmission de données à l'intérieur d'un réseau de communication, procédé de communication entre des terminaux d'utilisateur dans un réseau de communication cellulaire et réseau de communication cellulaire

(30) Priorität: 29.05.2007 DE 102007024913
(43) Veröffentlichungstag der Anmeldung: 03.12.2008
(73) Patentinhaber: Vodafone Holding GmbH, 40213 Düsseldorf (DE)
(72) Erfinder: Birle, Christian, 80797 München (DE); Koch, Wolfgang Prof., 90562 Heroldsberg (DE); Schmidt, Armin, 91207 Lauf an der Pegnitz (DE)
(74) Vertreter: Müller, Thomas

(56) Entgegenhaltungen:
- EP-A- 1 089 586
- EP-A- 1 207 370
- EP-A- 1 921 873
- US-A1- 2004 029 602
- US-A1- 2007 078 601

## Beschreibung

Die vorliegende Erfindung betrifft zunächst ein Verfahren zur Verringerung der Latenzzeit bei der Datenübertragung innerhalb eines Kommunikationsnetzes. Schließlich betrifft die Erfindung auch ein zellulares Kommunikationsnetz.

Seit der Einführung zellularer Kommunikationsnetze, bei denen es sich insbesondere um Mobilfunknetze handelt, sind die Möglichkeiten bezüglich bestimmter Dienste und Anwendungen stetig gestiegen.

Ein zellulares Kommunikationsnetz besteht in der Regel aus dem eigentlichen Kernnetz und einem Zugangsnetz.

Bei einem Mobilfunknetz handelt es sich bei dem Zugangsnetz um das so genannten RAN-Netz, das "Radio Access Network". Das insbesondere drahtlose Zugangsnetz sorgt für die Funkverbindung zwischen den Nutzer-Endeinrichtungen, etwa mobilen Endgeräten wie Mobiltelefonen und dergleichen, und dem Kernnetz. Es besteht generell aus Funkbasisstationen, die die Funkverbindung zu den Nutzer-Endeinrichtungen herstellen. Weitere Bestandteile des RAN-Netzes sind die "Radio Network Controller" (RNC), die eine Verbindung zu den Mobilfunkvermittlungsstellen (MSC) im Kernnetz herstellen. Wenn über eine Nutzer-Endeinrichtung eine Kommunikation innerhalb des zellularen Kommunikationsnetzes durchgeführt werden soll, erfolgt die Initiierung der Kommunikation über den so genannten RACH-Kanal (Random Access Channel). Der RACH-Kanal ist der (Uplink-)Kanal, auf dem die Nutzer-Endeinrichtung der Funkbasisstation ihren Verbindungswunsch mitteilt. Über den RACH-Kanal erfolgt die Zuweisung eines Nutzkanals zu einer bestimmten Nutzer-Endeinrichtung.

Ein Nachteil heutiger Mobilfunknetze ist in deren relativ hohen Latenzzeiten zu sehen. Bei der Latenzzeit handelt es sich generell um eine Verzögerungszeit, etwa einem Zeitinterwall vom Ende eines Ereignisses bis zum Beginn der Reaktion auf dieses Ereignis. Derzeit werden Datenpakete über RNC (Radio Network Controller) an SGSN (Serving GPRS Support Node - Das SGSN ist Teil des paketorientierten GPRS-Kernnetzes. Es stellt die für die Abwicklung des Datenverkehrs notwendigen Serving-Funktionen zur Verfügung) und GGSN (Gateway GPRS Support Node - Das GGSN ist Teil des paketorientierten GPRS-Kernnetzes. Es stellt die für die Abwicklung des Datenverkehrs notwendigen Gateway-Funktionen zur Verfügung) an eine zentrale Rechnereinheit im Kernnetz, etwa einen entsprechend ausgebildeten Server, weitergegeben und von dort aus über dieselbe Kette rückwärts gerichtet verteilt. Die daraus resultierende Latenzzeit liegt in der Regel oberhalb der Anforderungen einer Reihe neuartiger Anwendungen.

Bei einer dieser Anwendungsbereiche handelt es sich um Telematikapplikationen. Im Bereich der Einführung von Telematikapplikationen in Fahrzeugen ist das Thema Kommunikation für kooperative Fahrzeuge eine große Herausforderung. Insbesondere Echtzeit-Kommunikation oder nahezu Echtzeit-Kommunikation ist hierbei eine Forderung der Automobilindustrie, um sicherheitsrelevante Applikationen zu unterstützen. Abhängig von der jeweiligen Anwendung liegt die maximal zulässige Latenzzeit hierbei im Bereich weniger Millisekunden bis zu einigen Sekunden.

Um die Latenzzeiten bei der Übertragung von Daten in einem zellularen Kommunikationsnetz zu verringern, sind im Stand der Technik bereits einige Lösungen beschrieben worden. In der DE 101 26 709 A1 etwa ist ein Verfahren zur Verringerung der Latenzzeit bei einer Übertragung von Informationen in einem GPRS-Netz offenbart. Bei dieser bekannten Lösung wird während der Datenlaufzeit in einem so genannten Uplink-Kanal, wobei die Daten von einer Nutzer-Endeinrichtung hin zu einem Server über das GPRS-Netz übertragen werden, in einer Basisstation des Netzes bereits präventiv ein so genannter Downlink-Kanal eröffnet, der den Empfang von Daten, die vom Server übertragen werden, in der Nutzer-Endeinrichtung ermöglicht. Durch diese bekannte Lösung können die auftretenden Latenzzeiten bereits reduziert werden. Allerdings sind die resultierenden Datenlaufzeiten immer noch nicht kurz genug, um den vorstehend beschriebenen Anforderungen bei Telematikapplikationen zu genügen.

In der EP 1 921 873 A1 ist ein Verfahren zur direkten Kommunikation zwischen Endgeräten beschrieben, wodurch Latenzzeiten verringert werden sollen. Dies funktioniert wie folgt. Eine Anfrage des ersten Endgeräts, um mit dem bestimmten zweiten Endgerät zu kommunizieren, wird an eine Basisstation geschickt. In der Basisstation wird geprüft, ob sich das zweite Endgerät in Reichweite befindet. Ist dies der Fall, wird ein direkter Kontakt zwischen den beiden Endgeräten hergestellt.

Die US 2004/0029602 A1 beschreibt eine Lösung zur Verbesserung der Kommunikation zwischen Endgeräten, wobei jedoch die Problematik der bestehenden Latenzzeiten keinerlei Rolle spielt. Dabei soll wiederum die direkte Kommunikation zwischen zwei bestimmten Endgeräten verbessert werden. Ein erstes Endgerät, das eine Kommunikation zu einem zweiten Endgerät aufbauen will, sendet die Anforderung an die Basisstation. Die Basisstation prüft, ob sich das Zielendgerät in Reichweite der Basisstation befindet. Ist dies der Fall, wird eine direkte Kommunikation zwischen den beiden Endgeräten hergestellt. Ist dies nicht der Fall, wird die Anforderung von der besagten Basisstation an andere Basisstationen transferiert.

Der vorliegenden Erfindung liegt daher die Aufgabe zugrunde, ein Verfahren zur Verringerung der Latenzzeiten sowie ein zellulares Kommunikationsnetz bereitzustellen, mit dem eine weitergehende, drastische Reduzierung der Latenzzeit erreicht werden kann, und mit dem die Möglichkeit eröffnet werden kann, eine zellulare Kommunikation für insbesondere sicherheitskritische Applikationen zu verwenden.

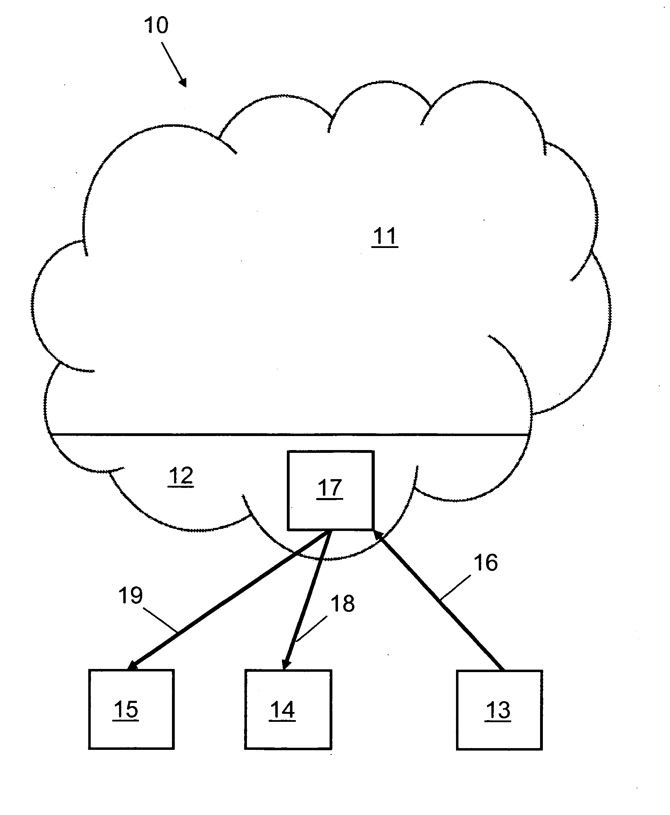

Diese Aufgabe wird erfindungsgemäß gelöst durch das Verfahren mit den Merkmalen gemäß dem unabhängigen Patentanspruch 1 sowie das zellulare Kommunikationsnetz mit den Merkmalen gemäß dem unabhängigen Patentanspruch 7. Weitere Merkmale und Details der Erfindung ergeben sich aus den Unteransprüchen sowie der Beschreibung sowie der Zeichnung. Merkmale und Details, die im Zusammenhang mit dem Verfahrensaspekt beschrieben sind, gelten dabei selbstverständlich auch im Zusammenhang mit dem erfindungsgemäßen zellularen Kommunikationsnetz, und umgekehrt.

Gemäß dem ersten Aspekt der Erfindung wird ein Verfahren zum Verringern der Latenzzeit bei der Datenübertragung innerhalb eines zellularen Kommunikationsnetzes, insbesondere eines Mobilfunknetzes, während der Kommunikation zwischen Nutzer-Endeinrichtungen bereitgestellt, wobei das Kommunikationsnetz ein Kernnetz und ein Zugangsnetz aufweist, das für eine Verbindung zwischen den Nutzer-Endeinrichtungen und dem Kernnetz sorgt. Das Verfahren ist gekennzeichnet durch folgende, auf Seiten des Kommunikationsnetzes durchgeführte Schritte: A) Empfangen von Informationen der Nutzer-Endeinrichtungen im Zugangsnetz, die zumindest Inhaltsdaten und Positionsdaten umfassen; und B) Zumindest teilweise direktes Übertragen der Inhaltsdaten, oder der Inhaltsdaten und Positionsdaten an zumindest ausgewählte Nutzer Endeinrichtungen, die einen räumlichen Bezug zu der die Informationen absendenden Nutzer-Endeinrichtung oder den von der Nutzer-Endeinrichtung abgesendeten Informationen haben, wobei die Übertragung der Daten aus dem Zugangsnetz zumindest an die ausgewählten Nutzer-Endeinrichtungen mittels Multicast oder Broadcast erfolgt.

Durch das erfindungsgemäße Verfahren lassen sich die bisher auftretenden Latenzzeiten erheblich reduzieren. Das liegt daran, dass die Informationen, die von einer Nutzer-Endeinrichtung übertragen und im Zugangsnetz empfangen werden, bereits vom Zugangsnetz aus weiterverteilt werden, ohne dass die Informationen zunächst ins Kernnetz übertragen und von diesem dann zurück übertragen werden müssten. Wie dies im Einzelnen geschehen kann, wird anhand nicht ausschließlicher Beispiele im weiteren Verlauf der Beschreibung näher erläutert.

Vorzugsweise kann vorgesehen sein, dass die empfangenen Informationen innerhalb des Zugangsnetzes in einer im Zugangsnetz vorgesehenen Analyseeinrichtung analysiert werden. Die Informationen werden dann zunächst von der Nutzer-Endeinrichtung in das Zugangsnetz übertragen, dort analysiert und dann vom Zugangsnetz aus weiterverteilt.

Zusammengefasst betrifft die vorliegende Erfindung also ein Verfahren zum Verringern der Latenzzeit bei der Datenübertragung innerhalb eines zellularen Kommunikationsnetzes, insbesondere eines Mobilfunknetzes, während der Kommunikation zwischen Nutzer-Endeinrichtungen, wobei das Kommunikationsnetz ein Kernnetz und ein Zugangsnetz aufweist, das für eine Verbindung zwischen den Nutzer-Endeinrichtungen und dem Kernnetz sorgt. Um eine drastische Reduzierung der auftretenden Latenzzeiten erreichten zu können, wodurch die Möglichkeit eröffnet werden kann, eine zellulare Kommunikation für insbesondere sicherheitskritische Applikationen zu verwenden, ist erfindungsgemäß vorgesehen, dass von einer Nutzer-Endeinrichtung abgeschickte Informationen im Zugangsnetz empfangenen werden, optional in einer Analyseeinrichtung innerhalb des Zugangsnetzes analysiert werden, und aus dem Zugangsnetz zumindest teilweise direkt an zumindest ausgewählte Nutzer-Endeinrichtungen übertragen werden.

Vorteilhaft ist vorgesehen, dass die Informationen von der Nutzer-Endeinrichtung über einen so genannten Uplink-Kanal an das Zugangsnetz übertragen werden. Somit ist es nicht erforderlich, dass der Nutzer-Endeinrichtung vom Kernnetz bereits ein Kommunikationskanal zugewiesen worden ist. In einem zellularen Kommunikationsnetz wird ein solcher Uplink-Kanal typischerweise dafür verwendet, Funkressourcen vom Zugangsnetz anzufordern, wenn von der Nutzer-Endeinrichtung eine Kommunikationsverbindung, beispielsweise eine Telefongespräch, initiiert werden soll. Nunmehr wird bereits dieser Uplink-Kanal dazu genutzt, um die Informationen, bei denen es sich vorzugsweise um sicherheitsrelevante Informationen handelt, weiterleiten zu können.

Vorteilhaft können die Informationen von der Nutzer-Endeinrichtung über einen dem Zugangsnetz zugeordneten RACH-Kanal (Random Access Chanel) empfangen werden.

Vorzugsweise kann das Zugangsnetz als RAN-Netz (Radio Access Network) ausgebildet sein, wobei die Informationen von der Nutzer-Endeinrichtung über einen RACH-Kanal (Random Access Chanel) des RAN-Netzes direkt im RAN-Netz empfangen werden.

Der Vorteil bei dieser Ausgestaltung liegt darin, dass der Kanal (P)RACH, der nur im Uplink existiert, von der Nutzer-Endeinrichtung, beispielsweise einem Mobiltelefon oder einem anders ausgestalteten Handset, ohne einen ihr/hm zugewiesenen Kanal (dedicated channel: DPDCH/DPCCH) genutzt werden kann, um Nachrichten an das RAN-Netzwerk, beispielsweise ein UTRAN (UMTS Terrestrial Radio Access Network) zu senden. Der Uplink-Kanal dient typischerweise für die Anforderung von Funkressourcen vom (UT)RAN, wenn ein Mobilteilnehmer ein Telefongespräch initiiert.

Auf diese Weise können insbesondere sicherheitsrelevante Information weitergeleitet werden.

Bestandteile der Meldung können beispielsweise Zeitstempel, Position und eine eSafetyklasse sein. Die eSafetyklasse beschreibt im Bereich der Telematik beispielsweise, ob ein Ereignis wie Crash, Nebel, Glatteis und dergleichen erkannt wurde.

Erfindungsgemäß erfolgt die Übertragung der Informationen, oder die Übertragung der Inhaltsdaten oder der Inhaltsdaten und Positionsdaten aus dem Zugangsnetz an die zumindest ausgewählten Nutzer-Endeinrichtungen mittels Multicast oder Broadcast. Unter "Multicast" wird generell eine Übertragungsart verstanden, die von einem Punkt aus zu Teilnehmern innerhalb einer Gruppe erfolgt. Multicast wird auch als Mehrpunktverbindung bezeichnet. Der Vorteil von Multicast liegt darin, dass gleichzeitig Nachrichten über eine Adresse an mehrere Teilnehmer, die insbesondere Mitglieder einer geschlossenen Gruppe sind, übertragen werden können. Unter "Broadcast" ist generell eine Übertragungsart zu verstehen, die von einem Punkt aus zu allen Teilnehmern erfolgt, wobei die Übertragung gleichzeitig erfolgt. Gängige Broadcast-Anwendungen sind Rundfunk und Fernsehen. In Kommunikationsnetzen stellt Broadcast eine Nachricht dar, die an alle Nutzer-Endeinrichtungen im Kommunikationsnetz verschickt wird.

Vorzugsweise können die Inhaltsdaten, oder die Inhaltsdaten und Positionsdaten an einen vorgegebenen räumlichen Bereich übertragen werden, der eine oder mehrere Zellen des Kommunikationsnetzes umfasst, oder der eine bestimmte geographische Position darstellt.

Je nach Ereignis kann beispielsweise vorgesehen sein, dass die Informationen beziehungsweise Daten - vorzugsweise im Broad-/Multicast - an alle Teilnehmer direkt versendet werden, die sich in einer Zelle oder Location Area befinden. Alternativ oder zusätzlich ist auch denkbar, dass die Verteilung über eine Filterung in einer netzwerkseitig vorgehaltenen Rechnereinheit, die sich vorteilhaft im Zugangsnetz befindet, an alle Teilnehmer eines Dienstes erfolgt.

Um das Verfahren besonders einfach durchführen zu können, können die Informationsdaten, oder die Inhaltsdaten, oder die Inhaltsdaten und Positionsdaten vorzugsweise ohne vorherige Verifizierung an die zumindest ausgewählten Nutzer-Endeinrichtungen übertragen werden.

Gemäß einem weiteren Aspekt der Erfindung wird ein zellulares Kommunikationsnetz bereitgestellt, mit einem Kernnetz und einem Zugangsnetz, das für eine Verbindung zwischen Nutzer-Endeinrichtungen und dem Kernnetz sorgt. Das zellulare Kommunikationsnetz ist dadurch gekennzeichnet, dass im Zugangsnetz eine Einrichtung zum Empfangen von Informationen der Nutzer-Endeinrichtungen im Zugangsnetz, die zumindest Inhaltsdaten und Positionsdaten umfassen, und zum zumindest teilweisen Übertragen der Inhaltsdaten, oder Inhaltsdaten und Positionsdaten an zumindest ausgewählte Nutzer-Endeinrichtungen, die einen räumlichen Bezug zu der die Informationen absendenden Nutzer-Endeinrichtung oder den von der Nutzer-Endeinrichtung abgesendeten Informationen haben, aus dem Zugangsnetz vorgesehen ist und dass das Zugangsnetz eine Einrichtung zum Übertragen der Informationen, oder der Inhaltsdaten oder der Inhaltsdaten und Positionsdaten in Form von Multicastdaten oder Broadcastdaten aufweist.

Zu dem Aufbau, der Funktionsweise sowie den Vorteilen und Merkmalen des zellularen Kommunikationsnetzes wird zusätzlich zu den nachfolgenden Ausführungen ebenfalls auf die vorstehenden Ausführungen zu dem erfindungsgemäßen Verfahrensaspekt vollinhaltlich Bezug genommen und hiermit verwiesen.

Erfindungsgemäß ist im Zugangsnetz des zellularen Kommunikationsnetzes eine Einrichtung vorgesehen zum Empfangen von Informationen der Nutzer-Endeinrichtungen im Zugangsnetz, die zumindest Inhaltsdaten und Positionsdaten umfassen, und zum Übertragen der Inhaltsdaten, oder Inhaltsdaten und Positionsdaten an zumindest ausgewählte Nutzer Endeinrichtungen, die einen räumlichen Bezug zu der die Informationen absendenden Nutzer-Endeinrichtung oder den von der Nutzer-Endeinrichtung abgesendeten Informationen haben.

Vorzugsweise kann die Einrichtung zum Empfangen von Informationen der Nutzer-Endeinrichtungen eine Analyseeinrichtung zum Analysieren der empfangenen Informationen aufweisen, oder aber als Analyseeinrichtung zum Analysieren der empfangenen Informationen ausgebildet sein. Beispielsweise kann die Analyseeinrichtung als Rechnereinheit ausgebildet sein.

Bevorzugt kann das Zugangsnetz als RAN-Netz (Random Access Network) ausgebildet sein. Dieses RAN-Netz kann insbesondere einen RNC (Radio Network Controller) aufweisen, wobei die Analyseeinrichtung innerhalb des RAN-Netzes im Nahbereich des RNC vorgesehen ist.

Vorteilhaft kann das Zugangsnetz wenigstens einen RACH-Kanal (Random Access Channel) zum Empfangen der Informationen von der Nutzer-Endeinrichtung aufweisen.

In weiterer Ausgestaltung kann vorgesehen sein, dass das Zugangsnetz eine Einrichtung zum Übertragen der Informationen, oder der Inhaltsdaten oder der Inhaltsdaten und Positionsdaten in Form von Multicastdaten oder Broadcastdaten aufweist.

Die Erfindung wird nun anhand eines Ausführungsbeispiels unter Bezugnahme auf die beiliegende Zeichnung näher erläutert. Dabei ist in der einzigen Figur schematisch ein Kommunikationsnetz dargestellt, mittels dessen das erfindungsgemäße Verfahren durchgeführt werden kann.

In der Figur ist ein als Mobilfunknetz ausgebildetes zellulares Kommunikationsnetz 10 dargestellt. Dieses besteht aus dem eigentlichen Kernnetz 11 und einem Zugangsnetz 12.

Bei einem Mobilfunknetz handelt es sich bei dem Zugangsnetz 12 um das so genannte RAN-Netz, das "Radio Access Network". Das insbesondere drahtlose Zugangsnetz 12 sorgt für die Funkverbindung zwischen den Nutzer-Endeinrichtungen 13 bis 15, etwa mobilen Endgeräten wie Mobiltelefonen und dergleichen, und dem Kernnetz 11. Im Beispiel sind der besseren Übersicht halber nur drei Nutzer-Endeinrichtungen 13, 14, 15 dargestellt.

Wenn etwa über eine Nutzer-Endeinrichtung 13 eine Kommunikation innerhalb des zellularen Kommunikationsnetzes 10 durchgeführt werden soll, erfolgt die Initiierung der Kommunikation über den so genannten RACH-Kanal (Random Access Channel) 16. Der RACH-Kanal 16 ist der (Uplink-)Kanal, auf dem die Nutzer-Endeinrichtung 13 ihren Verbindungswunsch mitteilt. Über den RACH-Kanal 16 erfolgt die Zuweisung eines Nutzkanals zu einer bestimmten Nutzer-Endeinrichtung 13.

Im Bereich der Einführung von Telematikapplikationen im Fahrzeug, in dem sich dann die mobilen Nutzer-Endeinrichtungen 13 bis 15 befinden, ist das Thema Kommunikation zwischen kooperativen Fahrzeugen, beispielsweise einem Fahrzeug 13 und folgenden Fahrzeugen 14 und 15 eine große Herausforderung. Insbesondere eine Echtzeit-Kommunikation oder eine nahezu Echtzeit-Kommunikation ist hierbei eine Forderung der Automobilindustrie, um sicherheitsrelevante Applikationen zu unterstützen. Dabei kann es sich beispielsweise um eine Warnung einer Vollbremsung des Fahrzeugs 13 an die folgenden Fahrzeuge 14, 15 handeln.

Die aktuelle Struktur heutiger Mobilfunknetze 10 bedingt noch eine relativ hohe Latenzzeit. Datenpakete werden von der Nutzer-Endeinrichtung 13 an einen zentralen Server im Kennetz 11 weitergegeben und von dort über die gleiche Kette rückwärts gerichtet an die Nutzer-Endeinrichtungen 14, 15 verteilt. Die daraus resultierende Latenzzeit liegt in der Regel über den Anforderungen sicherheitsrelevanter Applikationen.

Mit der vorliegenden Erfindung wird eine drastische Reduzierung der Latenzzeit und somit eine Möglichkeit geschaffen, zellulare Kommunikation für sicherheitskritische Applikationen zu verwenden.

Abweichend gegenüber den bisher bekannten Lösungen wird nunmehr die Möglichkeit geschaffen, dass beispielsweise von der Nutzer-Endeinrichtung 13 eine Information über den Uplink-Kanal 16, etwa einen RACH-Kanal, direkt an das Zugangsnetz 12, beispielsweise das RAN-Netz, versendet wird.

Die zur Verfügung stehende Datenmenge ist in der Regel sehr eingegrenzt und liegt beispielsweise bei 10 bis 20 kByte. Beispielsweise könnte daher vorgesehen sein, dass von der Nutzer-Endeinrichtung deshalb nur ein Trigger plus Position plus Richtung übertragen wird (beispielsweise Nebel oder bremsendes Fahrzeug). Die Information wird bereits im Zugangsnetz 12 (zum Beispiel im Radio Network Controller oder SGSN) sofort in einer Analyseeinrichtung 17, etwa einem spezifischen Identifier, erkannt und - vorzugsweise per Multicast oder Broadcast - an alle in einem räumlichen Bereich (etwa eine oder mehrere Zellen oder eine so genannte Location Area) befindliche Nutzer-Endeinrichtungen 14, 15 reflektiert. Dies ist durch die als Pfeile dargestellten Übertragungswege 18, 19 angedeutet.

Dieser Vorgang kann insbesondere ohne vorherige Verifizierung erfolgen. Es ist jedoch auch vorstellbar, diese Informationen vorab zu verifizieren, bevor sie an andere verteilt werden. Die Analyseeinrichtung 17 übernimmt die Funktion eines Reflektors, der vorteilhaft über ein gewisses Maß an Intelligenz verfügt. Wichtig ist insbesondere, dass die Analyseeinrichtung 17 innerhalb des Zugangsnetzes 12 möglichst nahe beim Radio Network Controller /RNC) integriert ist, um die Latenzzeiten möglichst in den Millisekundenbereich drücken zu können.

Zusammenfassend wird noch einmal verdeutlicht, dass der Vorteil des erfindungsgemäßen Verfahrens sowie des zellularen Kommunikationsnetzes insbesondere darin besteht, dass ein Kanal, etwa ein Kanal (P)RACH 16, der nur im Uplink existiert und von der Nutzer-Endeinrichtung 13, etwa einem Handset, ohne einen ihm zugewiesenen Kanal (dedicated channel: DPDCH/DPCCH) genutzt wird, um Nachrichten an das Zugangsnetz 12, etwa ein UTRAN, zu senden. Der Uplink-Kanal 16 ist typischerweise für die Anforderung von Funkressourcen vom UTRAN erforderlich, wenn ein Mobilteilnehmer ein Telefongespräch initiiert. Nunmehr wird es möglich, bereits auf diesem Weg die sicherheitsrelevante Information weiterleiten zu können. Bestandteile der Meldung, die dann an andere Nutzer-Endeinrichtungen 14, 15 übertragen werden, sind beispielsweise Zeitstempel, Position und eine eSafetyklasse. Die eSafetyklasse beschreibt, ob ein Ereignis wie Crash, Nebel, Glatteis oder dergleichen erkannt wurde. Je nach Ereignis wird die Information direkt im Broad-/Multicast an alle Teilnehmer 14, 15 versendet, die sich in einer Zelle oder Location Area befinden. Möglich ist aber auch die Verteilung über die Filterung in einem Zentralelement an alle Teilnehmer eines Dienstes.

**Bezugszeichenlist**
- 10: Zellulares Kommunikationsnetz (Mobilfunknetz)
- 11: Kernnetz
- 12: Zugangsnetz
- 13: Nutzer-Endeinrichtung (Fahrzeug)
- 14: Nutzer-Endeinrichtung (Fahrzeug)
- 15: Nutzer-Endeinrichtung (Fahrzeug)
- 16: Uplink-Kanal (RACH-Kanal)
- 17: Analyseeinrichtung
- 18: Übertragungsweg
- 19: Übertragungsweg

## Patentansprüche

1. Verfahren zum Verringern der Latenzzeit bei der Datenübertragung innerhalb eines zellularen Kommunikationsnetzes (10), insbesondere eines Mobilfunknetzes, während der Kommunikation zwischen Nutzer-Endeinrichtungen(13; 14, 15), wobei das Kommunikationsnetz (10) ein Kernnetz (11) und ein Zugangsnetz (12) aufweist, das für eine Verbindung zwischen den Nutzer-Endeinrichtungen (13, 14, 15) und dem Kernnetz (11) sorgt, **gekennzeichnet durch** folgende, auf Seiten des Kommunikationsnetzes (10) durchgeführte Schritte:
A) Empfangen von Informationen der Nutzer-Endeinrichtungen (13) im Zugangsnetz (12), die zumindest Inhaltsdaten und Positionsdaten umfassen; und
B) direktes Übertragen der Inhaltsdaten, oder der Inhaltsdaten und Positionsdaten an zumindest ausgewählte Nutzer Endeinrichtungen (14, 15), die einen räumlichen Bezug zu der die Informationen absendenden Nutzer-Endeinrichtung (13) oder den von der Nutzer-Endeinrichtung (13) abgesendeten Informationen haben ohne dass die Informationen zunächst ins kernnetz übertragen werden, wobei die Übertragung der Daten aus dem Zugangsnetz (12) zumindest an die ausgewählten Nutzer-Endeinrichtungen (14, 15) mittels Multicast oder Broadcast erfolgt.

2. Verfahren nach Anspruch 1, **dadurch gekennzeichnet, dass** die empfangenen Informationen innerhalb des Zugangsnetzes in einer im Zugangsnetz vorgesehenen Analyseeinrichtung (17) analysiert werden.

3. Verfahren nach Anspruch 1 oder 2, **dadurch gekennzeichnet, dass** die Informationen von der Nutzer-Endeinrichtung (13) über einen dem Zugangsnetz (12) zugeordneten RACH-Kanal (16), Random Access Channel empfangen werden.

4. Verfahren nach Anspruch 1 oder 2, **dadurch gekennzeichnet, dass** das Zugangsnetz (12) als RAN-Netz, Radio Access Network, ausgebildet ist und dass die Informationen von der Nutzer-Endeinrichtung (13) über einen RACH-Kanal (16) Random Access Channel des RAN-Netzes (12) direkt im RAN-Netz empfangen werden.

5. Verfahren nach einem der Ansprüche 1 bis 4, **dadurch gekennzeichnet, dass** die Inhaltsdaten, oder die Inhaltsdaten und Positionsdaten an einen vorgegebenen räumlichen Bereich übertragen werden, der eine oder mehrere Zellen des Kommunikationsnetzes (10) umfasst, oder der eine bestimmte geographische Position darstellt.

6. Verfahren nach einem der Ansprüche 1 bis 5, **dadurch gekennzeichnet, dass** die Informationsdaten, oder die Inhaltsdaten, oder die Inhaltsdaten und Positionsdaten ohne vorherige Verifizierung an die zumindest ausgewählten Nutzer-Endeinrichtungen (14, 15) übertragen werden.

7. Zellulares Kommunikationsnetz (10), mit einem Kernnetz (11) und einem Zugangsnetz (12), das für eine Verbindung zwischen Nutzer-Endeinrichtungen (13, 14, 15) und dem Kernnetz (11) sorgt, **dadurch gekennzeichnet, dass** im Zugangsnetz (12) eine Einrichtung zum Empfangen von Informationen der Nutzer-Endeinrichtungen (13) im Zugangsnetz (12), die zumindest Inhaltsdaten und Positionsdaten umfassen, und zum direkten Übertragen der Inhaltsdaten, oder Inhaltsdaten und Positionsdaten an zumindest ausgewählte Nutzer-Endeinrichtungen (14, 15), die einen räumlichen Bezug zu der die Informationen absendenden Nutzer-Endeinrichtung (13) oder den von der Nutzer-Endeinrichtung (13) abgesendeten Informationen haben, ohne dass die Informationen zunächst ins kernnetz übertragen werden aus dem Zugangsnetz (12) vorgesehen ist und dass das Zugangsnetz (12) eine Einrichtung zum Übertragen der Informationen, oder der Inhaltsdaten oder der Inhaltsdaten und Positionsdaten in Form von Multicastdaten oder Broadcastdaten aufweist.

8. Zellulares Kommunikationsnetz nach Anspruch 7, **dadurch gekennzeichnet, dass** die Einrichtung zum Empfangen von Informationen der Nutzer-Endeinrichtungen (13) eine Analyseeinrichtung (17) zum Analysieren der Informationen aufweist.

9. Zellulares Kommunikationsnetz nach Anspruch 7 oder 8, **dadurch gekennzeichnet, dass** das Zugangsnetz (12) als RAN-Netz, Radio Access Network, ausgebildet ist.

10. Zellulares Kommunikationsnetz nach einem der Ansprüche 7 bis 9, **dadurch gekennzeichnet, dass** das Zugangsnetz (12) wenigstens einen RACH-Kanal (16), Random Access Channel, zum Empfangen der Informationen von der Nutzer-Endeinrichtung (13) aufweist.

## Claims

1. Method of reducing the latency period in data transmission within a cellular communications network (10), particularly a mobile telephone network, during communication between user terminals (13; 14, 15), the communications network (10) comprising a core network (11) and an access network (12) which provides a connection between the user terminals (13, 14, 15) and the core network (11), **characterised by** the following steps carried out on the part of the communications network (10):
A) receiving information from the user terminals (13) in the access network (12) which comprises at least content data and position data; and
B) directly transmitting the content data, or the content data and position data, to at least selected user terminals (14, 15) which have a spatial relationship with the user terminal (13) sending the information or the information sent by the user terminal (13) without the information first being transmitted to the core network, wherein the transmission of data from the access network (12) at least to the selected user terminals (14, 15) is done by multicast or broadcast.

2. Method according to claim 1, **characterised in that** the information received within the access network is analysed in an analyser (17) provided in the access network.

3. Method according to claim 1 or 2, **characterised in that** the information from the user terminal (13) is received through a RACH channel (16), Random Access Channel, associated with the access network (12).

4. Method according to claim 1 or 2, **characterised in that** the access network (12) is embodied as an RAN network, Radio Access Network, and **in that** the information from the user terminal (13) is received directly in the RAN network through a RACH channel (16), Random Access Channel of the RAN network (12).

5. Method according to one of claims 1 to 4, **characterised in that** the content data, or the content data and position data, are transmitted to a given spatial region which comprises one or more cells of the communications network (10), or which constitutes a specific geographic position.

6. Method according to one of claims 1 to 5, **characterised in that** the information data, or the content data, or the content data and position data, are transmitted without prior verification at least to the selected user terminals (14, 15).

7. Cellular communications network (10), having a core network (11) and an access network (12), which provides a connection between user terminals (13, 14, 15) and the core network (11), **characterised in that** in the access network (12) is provided a device for receiving information from the user terminals (13) in the access network (12) which comprises at least content data and position data, and for the direct transmission of the content data, or content data and position data, to at least selected user terminals (14, 15), which have a spatial relationship with the user terminal (13) sending the information or the information sent by the user terminal (13), without the information first being transmitted to the core network, from the access network (12), and **in that** the access network (12) comprises a device for transmitting the information or the content data or the content data and position data in the form of multicast data or broadcast data.

8. Cellular communications network according to claim 7, **characterised in that** the device for receiving information from the user terminals (13) comprises an analyser (17) for analysing the information.

9. Cellular communications network according to claim 7 or 8, **characterised in that** the access network (12) is embodied as an RAN network, Radio Access Network.

10. Cellular communications network according to one of claims 7 to 9, **characterised in that** the access network (12) comprises at least one RACH channel (16), Random Access Channel, for receiving the information from the user terminal (13).

## Revendications

1. Procédé de réduction du temps de latence lors de la transmission de données à l'intérieur d'un réseau de communication cellulaire (10), en particulier d'un réseau de radiocommunication mobile, durant la communication entre des équipements terminaux d'utilisateur (13 ; 14, 15), le réseau de communication (10) comportant un coeur de réseau (11) et un réseau d'accès (12) qui pourvoit à une liaison entre des équipements terminaux d'utilisateur (13, 14, 15) et le coeur de réseau (11), **caractérisé par** les étapes suivantes exécutées du côté du réseau de communication (10) :
A) réception d'informations des équipements terminaux d'utilisateur (13) dans le réseau d'accès (12), qui comprennent au moins des données de contenu et des données de position ; et
B) transmission directe des données de contenu, ou des données de contenu et des données de position, à au moins des équipements terminaux d'utilisateur sélectionnés (14, 15), qui ont une relation spatiale avec l'équipement terminal d'utilisateur (13) ayant envoyé les informations ou avec les informations envoyées par l'équipement terminal d'utilisateur (13), sans que les informations soient transmises d'abord dans le coeur de réseau, la transmission des données au moins aux équipements terminaux d'utilisateur sélectionnés (14, 15) étant effectuée depuis le réseau d'accès (12) au moyen d'une diffusion sélective ou non sélective.

2. Procédé selon la revendication 1, **caractérisé en ce que** les informations reçues à l'intérieur du réseau d'accès sont analysées dans un dispositif d'analyse (17) disposé dans le réseau d'accès.

3. Procédé selon la revendication 1 ou 2, **caractérisé en ce que** les informations sont reçues par l'équipement terminal d'utilisateur (13) par le biais d'un canal RACH (16), canal d'accès aléatoire, associé au réseau d'accès (12).

4. Procédé selon la revendication 1 ou 2, **caractérisé en ce que** le réseau d'accès (12) est conçu en tant que réseau RAN, réseau d'accès radio, et **en ce que** les informations sont reçues par l'équipement terminal d'utilisateur (13) directement dans le réseau RAN par le biais d'un canal RACH (16), canal d'accès aléatoire, du réseau RAN (12).

5. Procédé selon l'une quelconque des revendications 1 à 4, **caractérisé en ce que** les données de contenu, ou les données de contenu et les données de position, sont transmises à une zone spatiale prédéfinie qui comporte une ou plusieurs cellules du réseau de communication (10) ou qui représente une certaine position géographique.

6. Procédé selon l'une quelconque des revendications 1 à 5, **caractérisé en ce que** les données d'informations, ou les données de contenu, ou les données de contenu et les données de position, sont transmises au moins aux équipements terminaux d'utilisateur sélectionnés (14, 15) sans vérification au préalable.

7. Réseau de communication cellulaire (10), pourvu d'un coeur de réseau (11) et d'un réseau d'accès (12) qui pourvoient à une liaison entre des équipements terminaux d'utilisateur (13, 14, 15) et le coeur de réseau (11), **caractérisé en ce que** le réseau d'accès (12) comporte un dispositif qui est destiné à recevoir des informations des équipements terminaux d'utilisateur (13) dans le réseau d'accès (12), lesquelles informations comportant au moins des données de contenu et des données de position, et qui est destinée à la transmission directe, à partir du réseau d'accès (12), des données de contenu, ou des données de contenu et des données de position, à au moins des équipements terminaux d'utilisateur sélectionnés (14, 15) qui ont une relation spatiale avec l'équipement terminal d'utilisateur (13) envoyant les informations ou avec les informations envoyées par l'équipement terminal d'utilisateur (13), sans que les informations soient d'abord transmises dans le coeur de réseau, et **en ce que** le réseau d'accès (12) comporte un dispositif destiné à transmettre les informations, ou les données de contenu, ou les données de contenu et les données de position, sous forme de données de diffusion sélective ou de données de diffusion non sélective.

8. Réseau de communication cellulaire selon la revendication 7, **caractérisé en ce que** le dispositif destiné à recevoir des informations des équipements terminaux d'utilisateur (13) comporte un dispositif d'analyse (17) servant à analyser les informations.

9. Réseau de communication cellulaire selon la revendication 7 ou 8, **caractérisé en ce que** le réseau d'accès (12) est formé en tant que réseau RAN, réseau d'accès radio.

10. Réseau de communication cellulaire selon l'une quelconque des revendications 7 à 9, **caractérisé en ce que** le réseau d'accès (12) comporte au moins un canal RACH (16), canal d'accès radio, servant à recevoir des informations de l'équipement terminal d'utilisateur (13).
